# EUROPÄISCHE PATENTSCHRIFT

(11) **EP 4 102 952 B1**
(45) Veröffentlichungstag und Bekanntmachung des Hinweises auf die Patenterteilung: **16.07.2025**
(21) Anmeldenummer: 21708936.6
(22) Anmeldetag: 09.02.2021
(51) Int. Cl.: A01D 33/04, G06V 20/64, G06F 18/2413, G06F 18/25, G06V 10/20, G06V 10/82, G06V 20/10, G06V 20/00, G06V 20/56, G06V 20/68

(54) **VERFAHREN ZUM BETRIEB EINER MASCHINE ZUM ERNTEN UND/ODER TRENNEN VON HACKFRÜCHTEN, ZUGEHÖRIGE MASCHINE UND ZUGEHÖRIGES COMPUTERPROGRAMMPRODUKT**
METHOD FOR OPERATING A MACHINE FOR HARVESTING AND/OR SEPARATING ROOT CROPS, ASSOCIATED MACHINE AND ASSOCIATED COMPUTER PROGRAM PRODUCT
PROCÉDÉ POUR FAIRE FONCTIONNER UNE MACHINE POUR RÉCOLTER ET/OU SÉPARER DES PLANTES SARCLÉES, MACHINE CORRESPONDANTE ET PRODUIT-PROGRAMME INFORMATIQUE CORRESPONDANT

(30) Priorität: 14.02.2020 DE 102020103941
(43) Veröffentlichungstag der Anmeldung: 21.12.2022
(73) Patentinhaber: Grimme Landmaschinenfabrik GmbH & Co. KG, 49401 Damme (DE)
(72) Erfinder: STROTHMANN, Wolfram, 49078 Osnabrück (DE)
(74) Vertreter: Wischmeyer, André
(86) Internationale Anmeldenummer: PCT/EP2021/053070
(87) Internationale Veröffentlichungsnummer: WO 2021/160607

(56) Entgegenhaltungen:
- EP-A1- 1 763 988
- EP-A2- 0 699 379
- WO-A1-2020/094655
- US-A- 3 435 950
- US-A- 6 119 442
- US-A1- 2017 013 773
- US-A1- 2018 047 177
- MORQUIN DEMIAN ET AL: "An integrated neural network-based vision system for automated separation of clods from agricultural produce", ENGINEERING APPLICATIONS OF ARTIFICIAL INTELLIGENCE., vol. 16, no. 1, 1 February 2003 (2003-02-01), GB, pages 45 - 55, XP093039217, ISSN: 0952-1976, DOI: 10.1016/S0952-1976(03)00029-0

## Beschreibung

Die Erfindung betrifft ein Verfahren zum Betrieb einer Maschine zum Ernten von Hackfrüchten und/oder zum Trennen von Hackfrüchten von weiterem, mitgefördertem Material umfassend zumindest Boden in Form von loser Erde und/oder Bodenaggregaten sowie gegebenenfalls Kraut und/oder Steine. Gegenstand des Verfahrens ist weiterhin die Aufnahme zumindest eines Prüfbildes von zumindest einem mittels zumindest eines Transportelements, insbesondere eines Siebbandes, relativ zu einem Maschinenrahmen der Maschine fortbewegten Teil des Materials durch zumindest eine elektromagnetische, insbesondere optische, oder eine akustische Bilderfassungseinheit. Weiterhin wird mittels einer Auswertevorrichtung ein Betriebsparameter der Maschine eingestellt.

In der US 2017/013773 A1 wird über einen beispielsweise optischen oder akustischen Sensor die Textur des Bodens und/oder dessen Zerreibbarkeit mit dem Ziel erfasst, die Tiefe der Aushubelemente in Abhängigkeit der Bodeninformation anzupassen. Dem liegt die Erkenntnis zugrunde, dass sich bei einem Übergang von weichem zu harten Boden bei gleichen Einstellungen die Arbeitstiefe der Aushubelemente verringert, was mit Hackfruchtverlusten einhergehen kann. Über die Einstellung der Aushubtiefe der Erntemaschine in Abhängigkeit von der Bodenbeschaffenheit vor dem Ausheben des Erntegutes wird daher der Verlust von Erntegut verringert und es ergeben sich bessere Erträge.

In dem Artikel von Morquin Demian ET AL: »An integrated neural network-based vision system for automated separation of clods from agricultural produce«, ENGI-NEERING APPLICATIONS OF ARTIFICIAL INTELLIGENCE., Bd. 16, Nr. 1, 1. wird mittels eines optischen Sensors und einer Auswertung des Prüfbildes zwischen Zwiebeln und Kluten unterschieden, um Kluten auszusortieren.

In der nachveröffentlichten WO 2020/094655 A1 ist ein Verfahren zur Regelung des Betriebs einer Maschine zum Ernten von Hackfrüchten und/oder zum Trennen von Hackfrüchten von weiterem Erntegut umfassend Beimengen offenbart, wobei gemäß dem Verfahren zumindest ein Prüfbild aufgenommen wird und eine Auswertevorrichtung anhand des Prüfbildes ein Trenngeräteeinstellsignal erzeugt. Ebenfalls ist eine entsprechende Maschine offenbart.

In der EP 0 699 379 A2 ist eine Siebfördervorrichtung offenbart, deren Siebband Stellmittel zugeordnet sind, deren Stellglieder verstellbar sind. Als Führungsgröße dienen Signale eines Messgeräts, beispielsweise eines Infrarot-Sensors oder einer Lichtschranke.

Die US 3 435 950 A offenbart eine Trennvorrichtung zur Trennung von Erntegut und Beimengen, wobei für die Trennung der Materialien auf den von diesen erzeugten Schall, deren Reflexion oder eine Strahlungsenergie verwendet wird.

Es ist Aufgabe der vorliegenden Erfindung, während des Transports der Hackfrüchte durch eine Hackfruchterntemaschine eine passende Menge von Beimengen auszusieben.

Die Aufgabe wird gelöst durch einen Gegenstand gemäß Anspruch 1. Vorteilhafte Ausgestaltungen der Erfindung sind den Unteransprüchen sowie der Beschreibung zu entnehmen. Weiterhin wird die Aufgabe gelöst durch eine Maschine gemäß Anspruch 14 sowie durch ein Computerprogrammprodukt gemäß Anspruch 15.

Erfindungsgemäß ist vorgesehen, bei einem Verfahren zum Betrieb einer Maschine zum Ernten und/oder Trennen von Hackfrüchten von weiterem, mitgefördertem Material umfassend zumindest Boden in Form von loser Erde und/oder Bodenaggregaten sowie gegebenenfalls Kraut und/oder Steinen zunächst durch zumindest eine elektromagnetische, insbesondere eine optische, oder eine akustische Bilderfassungseinheit zumindest ein Prüfbild von zumindest einem mittels zumindest eines Transportelements in Form eines Igel- oder Siebbandes, relativ zu einem Maschinenrahmen der Maschine fortbewegten Teil des Materials aufzunehmen und mittels einer Auswertevorrichtung auf Basis eines anhand des Prüfbildes erzeugten und/oder durch dieses ausgebildeten Prüfdatensatzes ein Einstellsignal zur Einstellung zumindest eines Betriebsparameters des Transportelements oder eines weiteren Transportelements der Maschine zu erzeugen, wobei zumindest ein Merkmal zur Beschreibung der Siebfähigkeit des mitgeförderten Bodens durch die Auswertevorrichtung bestimmt und zur Einstellung des Betriebsparameters verwendet wird, wobei das Merkmal einen oder mehrere Werte umfasst, der oder die die Größe eines oder mehrerer Bodenaggregate (28) beschreiben.

Durch das Einstellsignal ändert sich die Einwirkung eines oder mehrerer Stell- oder Antriebsmittel des Transportelements, um die Absiebung des Bodens zu variieren. Die Erfindung betrifft somit Transportelemente in Form von Trenngeräten, die zum Absieben von Boden vorgesehen sind, insbesondere handelt es sich hierbei um Siebbänder, Igelbänder und/oder Walzenanordnungen.

Insbesondere ist die Bilderfassungseinheit mit ihrem Sensor auf ein als Siebband ausgebildetes Transportelement ausgerichtet, welches als erstes oder zweites Siebband nach der Aufnahme des Materials dieses durch die Maschine transportiert. Hierdurch wird in dieser Ausführung des erfindungsgemäßen Verfahrens der Boden sehr früh nach der Aufnahme analysiert, insbesondere bei einer Erfassung in einer ersten Hälfte oder einem ersten Drittel des Siebbandes, um sehr schnell durch Anpassung des Betriebsparameters auf Bodenzustandsänderungen reagieren zu können und somit zumindest einen Teil, insbesondere einen überwiegenden Teil einer ein oder vorzugsweise mehrere Siebbänder umfassenden Siebstrecke umgehend oder sogar präventiv anpassen zu können. Die Einstellung des Betriebsparameters erfolgt vorzugsweise innerhalb eines Zeitfensters von maximal 1 Minute, vorzugsweise maximal 30 Sekunden, nach Aufnahme des Prüfbildes, d.h. die Auswertevorrichtung ist dergestalt ausgebildet, dass sie innerhalb dieser Zeit die Auswertung des Prüfbildes erledigt hat. Weiterhin ist insbesondere innerhalb dieser Zeit die Anpassung des Betriebsparameters zumindest veranlasst oder erfolgt.

Als Bodenaggregate werden solche Aggregate aus Boden- bzw. Erdbestandteilen angesehen, die einen minimalen Durchmesser von nicht weniger als 5 mm aufweisen. Als Durchmesser kann beispielsweise bei nicht kugelförmigen Aggregaten ein Äquivalentdurchmesser angenommen werden. Ein Bodenaggregat besteht immer aus einer Mehrzahl von miteinander verbundenen Körnern, die insbesondere Sand, Schluff und/oder Ton umfassen. Lose Erde sind Kornfraktionen mit Korngrößen bis 2 mm sowie entsprechend der vorstehenden Definition zusammenhängende Körner mit einem Durchmesser kleiner als 5 mm.

Ebenfalls kann die optische oder akustische Bilderfassungseinheit oder eine weitere solche Bilderfassungseinheit mit ihrem Sensor auf einen Bereich nach einem Transportelement ausgerichtet sein, um auf etwaige verbleibende Bodenaggregate reagieren zu können. So kann bei Erkennung beispielsweise von zu wenigen kleineren Aggregaten und zu vielen großen Aggregaten die Siebweite reduziert werden und beispielsweise die Klopfleistung eines auf das Siebband wirkenden Klopfers zum Verkleinern großer Aggregate erhöht werden.

Vorzugsweise werden insbesondere mittels eines Klassifizierungsverfahrens im Prüfbild vorhandene Bestandteile des Materials umfassend lose Erde und/oder Bodenaggregate, insbesondere Kluten, bestimmt, wobei Kluten generell als größere Aggregate angesehen werden, d.h. als Brocken von Erde mit einem Durchmesser oberhalb von 5 cm. Der Begriff "Schollen" wird gelegentlich synonym für länglich ausgebildete Kluten verwendet. Anhand einer solchen Klassifizierung, beispielsweise durch die Auswertung der Farbwerte des Prüfdatensatzes, können einzelne Bestandteile des betrachteten transportierten Materials identifiziert werden. So kann für die Betrachtung der Bodenaggregate auf einfache Weise auf ein Prüfbild oder einen Ausschnitt desselben abgestellt werden, der ausschließlich oder zumindest zu einem überwiegenden Bestandteil (s.u.) Bodenaggregate aufweist.

Vorzugsweise umfasst das Merkmal zur Beschreibung der Siebfähigkeit einen oder mehrere Werte, der oder die die Größe, Form, Feuchte, Festigkeit oder Farbe eines oder mehrerer Bodenaggregate und/oder eine oder mehrere insbesondere statistische Verteilungen der Form, Festigkeit oder Farbe einer Vielzahl von Bodenaggregaten beschreiben. Beispielsweise kann über einen solchen Wert eine Größenklasse für alle in einem Prüfbild oder Prüfdatensatz vorhandene Bodenaggregate zugewiesen werden, um zum Zwecke der besseren automatisierten Verarbeitung nicht auf einzelne Bodenaggregate abstellen zu müssen.

Vorzugsweise wird auf die Größe der betrachteten Bodenaggregate, insbesondere Kluten, abgestellt. Beispielsweise können dies Durchmesser, Äquivalentdurchmesser, projizierte Flächen oder Volumina sein. In einer weiteren alternativen oder ergänzenden Ausführung der Erfindung können Form- oder Farbparameter der Aggregate extrahiert werden, da die Farbe und Form sich bei verschiedenen Bodentypen und schwankenden Bodenfeuchtigkeiten, welche die Haupteinflussfaktoren für die Siebfähigkeit darstellen, entsprechend verändern. Gleiches gilt für die Festigkeit, die aus Farbe, Form und Größe ableitbar sein kann. Als ein Maß für die Festigkeit eines Bodenaggregats kann beispielsweise die Bruchlast verwendet werden.

In einer weiteren alternativen oder ergänzenden Ausbildung des erfindungsgemäßen Verfahrens dienen ein oder mehrere insbesondere statistisch-aggregierende Merkmale bzw. Verteilungen gebildet über die Werte für Größe, Farbe, Festigkeit und/oder Form einer Vielzahl von insbesondere unterschiedlichen Bodenaggregaten als Siebfähigkeitsmerkmale.

Derartige statistische Merkmale, welche die Verteilung einer Vielzahl von Einzelmerkmalen aggregieren, können beispielsweise Mittelwerte, Standardabweichungen/Varianzen, Median, Perzentile oder Momente 1., 2., k-ter Ordnung sein.

Gemäß einer Weiterbildung der Erfindung werden die Größen, Formen oder Farben in eine vordefinierte Anzahl von Klassen, vorzugsweise fünf, eingeordnet, wobei Werte von der ersten zur letzten Klasse monoton steigend oder fallend sind. Die durchschnittliche Zugehörigkeit oder die höchstwahrscheinliche Klasse einer Vielzahl von betrachteten Bodenaggregaten eines Prüfdatensatzes dienen dann als Merkmal zur Beschreibung der Siebfähigkeit. Liegt beispielsweise durchschnittlich eine kleine Aggregatgrößenklasse vor, z.B. weil überwiegend in trockenen, sandigen Boden gerodet wird, kann die Siebleistung reduziert werden, beispielsweise durch Einstellung eines kleinen Siebstab- oder Walzenabstandes.

Vorteilhafterweise werden in einer weiteren Ausbildung des erfindungsgemäßen Verfahrens Siebfähigkeitsmerkmale, welche in mehreren zeitlich aufeinanderfolgenden Auswertungszyklen gewonnen wurden, zeitlich gefiltert oder miteinander verrechnet, bevor basierend auf diesen der oder die Betriebsparameter bzw. deren Einstellung bestimmt werden. Insbesondere eignen sich hier die Verwendung von Tiefpassfiltern oder gleitenden Mittelwerten, um mögliche Ausreißer zu glätten.

Der Prüfdatensatz wird entweder durch das Prüfbild oder einen Teil davon ausgebildet. Ebenfalls kann es sich um einen Datensatz handeln, der sich durch eine Bearbeitung und/oder Analyse des Prüfbildes oder eines Teils davon ergibt. Weiterhin kann der Prüfdatensatz sowohl das Prüfbild selbst, ein bearbeitetes Prüfbild und/oder einen aus einer Analyse des Prüfbildes stammenden Datensatz aufweisen. Gleiches gilt für jeweilige Teile des Prüfbildes, des bearbeiteten Prüfbildes und eines auf Basis einer Analyse zumindest eines Teils des Prüfbildes geschaffenen Datensatz.

Das auf Basis des Prüfdatensatzes gewonnene zumindest eine Merkmal zur Bestimmung der Siebfähigkeit wird zur Einstellung des Betriebsparameters des oder eines der Transportelemente, insbesondere Siebbänder, verwendet, die zum Absieben der Erde vorgesehen sind. Nach einer qualitativen Bestimmung der vorhandenen Bestandteile im Erntegut, z.B. anhand von Farbwerten wie sie in der DE 102018127844 A1 beschrieben ist, wird anschließend eine quantitative Bestimmung des oder der Siebfähigkeitsmerkmale vorgenommen. Das Transportelement ist mittels des erfindungsgemäßen Verfahrens dahingehend verbessert einstellbar, dass eine gewünschte Menge an Bodenaggregaten, z.B. Kluten bzw. Klutengrößen, an einem nach der Aufnahme vorhandenen Bereich der Transportstrecke vorhanden ist und somit das zu verwertende Erntegut in Form von Hackfrüchten in Abhängigkeit gewünschter Bodenaggregate, insbesondere Bodenaggregatgrößen optimal getrennt bzw. gleichzeitig auch während des Transports durch die Vorrichtung geschont wird. Mittels des erfindungsgemäßen Verfahrens wird somit der Durchsatz der betriebenen Maschine erhöht bei gleichzeitiger Verringerung der Gefahr von Beschädigungen der Hackfrüchte, was zu einer verbesserten Wirtschaftlichkeit des Einsatzes der Maschine führt.

Als elektromagnetische Bilderfassungseinheit werden solche zur Herstellung von Abbildungen des auf dem Transportelement transportierten Materials verwendete Bilderfassungseinheiten bezeichnet, die zur Erfassung elektromagnetischer, insbesondere optischer, Wellen arbeitende Sensoren aufweisen. Hierbei kann es sich um zur Erfassung 1- oder mehrdimensionaler Abbildungen verwendbare Sensoren handeln. Zum Beispiel handelt es sich um einen oder mehrere Radarsensoren, die vom Material reflektierte Wellen, deren Frequenz in einem Bereich zwischen 10 und 150 Ghz liegt, empfangen können. Eine optische Bilderfassungseinheit ist auf die Erfassung von Licht, insbesondere im sichtbaren, Ultraviolett- und/oder Infrarot-Bereich, ausgelegt.

Als optische Bilderfassungseinheiten kommen insbesondere Kameras in Form von 2D-, 2,5D- oder 3D-Kameras wie beispielsweise RGB-Kameras, Time-of-Flight-Kameras, Schwarz-Weiß- bzw. Graustufenkameras oder Stereokameras in Frage. Ebenfalls können zur Erfassung des Ernteguts Lichtschnitt- oder strukturiertes Licht verwendende Verfahren, plenoptische Kameras oder dgl. zum Einsatz kommen. Akustische Bilderfassungseinheiten können insbesondere in Form von Arrays von distanzmessenden Schallsensoren, insbesondere Ultraschallsensoren, vorliegen, welche durch die kontinuierliche Bewegung des Erntegutstromes entlang des am Maschinenrahmen montierten Sensorarrays ebenfalls zur Erzeugung bildgebender Eingangsdaten, d.h. des Prüfbildes, für die Auswertevorrichtung geeignet sind. Gleiches gilt für arrayartige Anordnungen optischer Distanzsensoren oder arrayartige Anordnungen mechanischer Tastfühler. RGB-Kameras weisen oftmals zweidimensionale Bildsensoren in Form von CCD- oder CMOS-Sensoren auf.

Es versteht sich, dass in einem erfindungsgemäßen Verfahren und einer erfindungsgemäßen Vorrichtung sowohl eine elektromagnetische und eine akustische Bilderfassungseinheit kombiniert werden können als auch eine Bilderfassungseinheit ein oder mehrere elektromagnetische und/oder akustische Sensoren aufweisen kann.

Vorzugsweise wird das Merkmal auf Basis eines durch den Prüfdatensatz erzeugten oder durch diesen ausgebildeten Eingangsdatensatzes mittels einer Neuronalen-Netz-, Histogramm- und/oder Structure-from-Motion-Analyse bestimmt. Diese Analysen sind für große Datenmengen, die bei Betrachtung des Gutstroms während einer Erntefahrt insbesondere eines Kartoffel- oder Rübenroders entstehen, besonders gut geeignet.

Insbesondere ist das Neuronale Netz bei einer Weiterbildung des erfindungsgemäßen Verfahrens als Convolutional Neural Network ausgeführt ist, welches jeden Eingangsdatensatz in eine von mehreren Klassen einordnet, die die Werte unterschiedlicher Siebfähigkeitsmerkmale darstellen. Diese Art der Neuronalen Netze haben sich als besonders gut für die Identifikation der Bodenaggregate sowie deren zugewiesene Siebfähigkeitsmerkmale während der Erntefahrt herausgestellt.

Insbesondere umfasst die Auswertevorrichtung eine oder mehrere CPU-Einheiten und/oder ein oder mehrere graphische Prozessoreinheiten, insbesondere in Form von GPU- (Graphical Processing Unit) bzw. GPGPU- (General Purpose Graphical Processing Unit) und/oder FPGA (Field Programmable Gate Array)-basierte Prozessoreinheiten. Durch diese Ausprägung der Auswertevorrichtung lässt sich der Prüfdatensatz besonders ressourcenschonend und insbesondere lokal auswerten. Es versteht sich, dass die als EDV-Vorrichtung ausgebildete oder durch eine solche ausgebildete Auswertevorrichtung weitere übliche Mittel z.B. zur Stromversorgung, Schnittstellen, Arbeitsspeicher sowie nichtflüchtigen Programm- und Datenspeicher aufweist.

Erfindungsgemäß kann insbesondere unter schweren Erntebedingungen, bei denen der aufgenommene Boden bzw. die aufgenommene Erde in nur wenige große Aggregate zerfällt, zur Verbesserung der Absiebleistung des Transportelements, insbesondere eines Igel- oder Siebbandes beispielsweise ein Klopfer in Form eines Rotorklopfers oder Schwingklopfers eingestellt werden. Hierdurch wird eine zusätzliche Schwingbewegung des Transportelements bewirkt und so die Absiebleistung erhöht, da Bodenaggregate, beispielsweise in Form von Schollen durch die Stöße zerstört werden. Weitere oder ergänzende Betriebsparameter eines als Siebband ausgebildeten Transportelements sind insbesondere eine Siebbandgeschwindigkeit, eine Aufnahmesiebbandgeschwindigkeit, eine Einstellhöhe zumindest einer Dreiecksrolle, eine Einstellhöhe einer etwaig vorhandenen Fallstufe, eine Frequenz eines oder mehrerer Klopfer, eine Amplitude beispielsweise eines Schwingklopfers, die Position eines Klopfers oder auf das Siebband einwirkenden Stellmittels in Relation zum Siebband und/oder die lichte Weite des Siebbandes. Betriebsparameter des Siebbandes sind somit die von etwaigen auf das Siebband einwirkenden Einheiten einstellbaren Betriebsgrößen wie Geschwindigkeiten, Frequenzen, Amplituden oder Positionen. Ein Einstellsignal ist dann entsprechend ein die Einstellung dieser Grö-ßen bewirkendes Signal, welches von der Auswertevorrichtung ausgegeben oder initiiert wird. Auch bei als Igelbänder ausgebildeten Transportelementen teilweise die vorbezeichneten Einstellmittel vorhanden sein, insbesondere zur Einstellung der Bandgeschwindigkeiten. Bei Transportelementen in Form von Walzenanordnungen können deren Umdrehungsgeschwindigkeiten oder Abstände zueinander eingestellt werden.

Die insbesondere kamerabasierte Analyse des Gutstromes auf dem Transportelement, insbesondere einem Siebband, führt zu der Erfassung von Merkmalen, die die durchschnittliche Aggregatgröße abschätzbar werden lassen, so dass aufgrund dieser Information der Klopfer oder ein anderes Mittel zur Beeinflussung der Absiebleistung des Siebbandes bedarfsorientiert automatisch aktiviert oder deaktiviert sowie in seiner Funktion verstellt werden kann. So können beispielsweise mehrere in Bezug und insbesondere parallel zur Transportrichtung der Siebstrecke hintereinander angeordnete Einstellmittel variabel eingestellt werden.

Vorzugsweise erfasst die Bilderfassungseinheit insbesondere zumindest ein vorderes Drittel des Siebbandes. In Abhängigkeit der Position des Blickwinkels der Kamera ist es vorteilhaft, das ein optisch verzerrtes Bild des interessierenden Abschnittes in eine rechtwinklige Darstellung zu überführen.

Um Erntegut besonders gut und insbesondere unabhängig von den Umgebungsbedingungen genau zu erfassen, kann die betrachtete Siebbandstrecke bzw. das auf ihr transportierte Erntegut mittels einer Beleuchtungseinheit ausgeleuchtet werden.

Vorzugsweise wird für die Bestimmung der Aggregatgröße der Erd- bzw. Bodenaggregate, beispielsweise der Klutengröße, durch die Auswertevorrichtung ein zumindest zu 75%, vorzugsweise zu 90% und weiter vorzugsweise zu 95% sowie noch wiederum weiter vorzugsweise ausschließlich Erde bzw. Kluten aufweisender und insbesondere zusammenhängender sowie vorzugsweise rechteckiger Bereiche des Prüfbildes oder des Prüfdatensatzes ausgewählt. Auch wenn diese Bereiche im Erntebetrieb gerade bei hohen Fahrgeschwindigkeiten nicht in jedem Bild auftreten, hat es sich gezeigt, dass ein entsprechend eingeschränkter Bereich zur Bestimmung der Klutengröße besonders gute Ergebnisse liefert und selbst kleine Bereiche von insbesondere zumindest 15 Zentimetern x 15 Zentimetern ausreichend repräsentativ für eine Einstellung bzw. Änderung etwaiger Betriebsparameter sind.

Ein solcher Bereich wird insbesondere automatisiert ausgewählt. Dies erfolgt insbesondere über eine Untersuchung der im Prüfdatensatz enthaltenen Farbinformation, der Kanten bzw. Gradienten etwaiger 2D- oder 3D-Abbildungen sowie gegebenenfalls unter Verwendung statistischer Analysen. Insbesondere wird hierfür eine pixelweise Klassifizierung anhand von Farbinformationen verwendet.

Der diesen zusammenhängenden, und vorzugsweise rechteckigen Bereich mit zumindest im Wesentlichen Erde darstellende Teil des Prüfdatensatzes wird zur Bestimmung zumindest einer Klutengröße direkt oder bearbeitet als Eingangsdatensatz in eine Neuronale-Netz-, Histogramm- und/oder Structure-from-motion-Analyse gegeben, in welcher dem Bildbereich zumindest eine Klutengröße zugeordnet wird, welche zur Einstellung des Betriebsparameters verwendet wird.

Insbesondere für die Verwendung von neuronalen Netzen, vorzugsweise Convolutional Neural Networks (CNN), die Convolutional Layer enthalten, kann der Eingangsdatensatz beispielsweise in Vektorform umgewandelt werden. Topologisch kann es sich bei CNN um sequenzielle oder rekurrente Netze handeln. Convolutional Layer sind Verarbeitungsebenen im Netzwerk, die einen Faltungsfilter auf eine Eingangsmatrix anwenden. Wie bei anderen Layern auch besitzt der Faltungsfilter Freiheitsgrade in Form von Gewichten. Die Faltungsfilter dienen dabei zur Extraktion der Bildmerkmale, auf deren Basis anschließend z.B. eine Klassifizierung durchgeführt wird. Um die Anwendung von CNN für die Erfindung praktikabel zu machen, mussten allerdings in dessen Entwicklung einige Verbesserungen durchgeführt werden. Um den Speicherbedarf der Netze zu reduzieren, werden unter der Annahme, dass Bildmerkmale unabhängig von ihrer Position im Bild gleichermaßen interessant sind, geteilte Gewichte für die Neuronen des Faltungsfilters genutzt. Die geteilten Gewichte sind zudem auch robust gegenüber Translations-, Rotations-, Skalen- und Luminanzvarianz. Zusätzlich können zwischen den Convolutional Layern insbesondere Pooling Layer eingesetzt werden, welche bereichsweise Werte verwerfen. Vorzugsweise wird MaxPooling eingesetzt, wodurch alle Werte in einem kleinen Bereich (z.B. 2x2 oder 4x4) bis auf den Größten und somit Bedeutendsten verworfen werden.

Um die Berechnung des CNN möglichst einfach zu halten wird vorzugsweise eine ReLU (rectified linear unit) als Aktivierungsfunktion eingesetzt. Diese ist im negativen Bereich immer 0 und im positiven linear steigend. Mit dieser Verbesserung lässt sich ein CNN besonders gut für den Live-Betrieb einer erfindungsgemäßen Maschine verwenden. Ergänzend ist eine zur parallelen Berechnung verwendbare Rechnerarchitektur vorteilhaft. Die Neuronen innerhalb eines Layers lassen sich unabhängig voneinander und damit insbesondere parallel berechnen. Somit ist für CNN eine Architektur mit vielen parallelen Recheneinheiten z.B. in Form einer GPU gut geeignet.

Vorzugsweise wird der Bildausschnitt so gewählt, dass er das Maximum einer Erd-Dichte- Verteilung aufweist, d.h., der Bildausschnitt wird automatisiert so gewählt, dass er das Maximum einer entsprechenden Dichteverteilung umfassend im Wesentlichen Kluten bzw. Erde aufweist. Eine solche Verteilung ergibt sich insbesondere auf Basis einer pixelweisen Klassifizierung, in der sämtliche Pixel des betrachteten Bildbereiches hinsichtlich der Wahrscheinlichkeit ihrer Zugehörigkeit zu etwaigen Objektgruppen Hackfrucht, Erde/Kluten, sowie ggf. Stein und/oder Kraut klassifiziert wird. Eine weitere Klassifizierungsgröße könnte ebenfalls "leeres Siebband", d.h. das nicht Vorhandensein von etwaigem Erntegut, bedeuten. Vorzugsweise wird somit der Bereich mit der größten Anzahl an Erde darstellenden Pixeln für die Auswahl des Bildausschnitts verwendet. Der Maximalwert an "Erd-Dichte" ist hierbei der optimale Bereich, der dem vorzugsweise auf Basis von neuronalen Netzen, insbesondere einem CNN, arbeitenden Auswerteverfahren zur Erfassung des oder der Siebfähigkeitsmerkmale als Eingangsgröße zur Verfügung gestellt wird. Vorzugsweise werden Bildausschnitte mit einer Erd- bzw. Bodendichte von weniger als 75% nicht für die Bestimmung der die Siebfähigkeit beschreibenden Merkmale verwendet, so dass die Bestimmung des zumindest einen Siebfähigkeitsmerkmals nicht durch zu viele etwaig vorhandene Fremdkörper wie Steine, Kraut oder auch Hackfrüchte, beeinträchtigt wird. So kann beispielsweise der Bildausschnitt automatisiert auch in Abhängigkeit eines unteren Schwellwertes einer minimalen Erddichte definiert werden.

Es versteht sich, dass das neuronale Netz mit einer Vielzahl von entsprechend dem passenden Bildausschnitt gleich großen Prüfbildern bzw. Prüfdatensätzen vorab trainiert wird. Bei ähnlich großen Bildern können die Randbereiche kleinerer Bilder durch sog. Zero-Padding mit Nullen aufgefüllt werden. Bei Schwankungen der Bildgröße in einem Umfang von max. 10-15% führt dies nicht zu signifikanten Verschlechterungen des Bildanalyseergebnisses. Beispielsweise werden hierfür für eine Vielzahl von Prüfdatensätzen manuell jeweils eine von 5 Größenklassen zugeordnet.

Insbesondere bei Verwendung eines CNNs können den Bildbereichen des Prüfbildes bzw. des Prüfdatensatzes ein oder mehrere Kategorien hinsichtlich der Größe der Bodenaggregate zugeordnet werden. So kann beispielsweise auf einer Skala von 1 bis 5 jedem Bild ein entsprechender Wert zugeordnet werden. Während der Anlernphase des CNNs wird dieser Siebfähigkeitswert durch einen menschlichen Experten für eine repräsentative Anzahl von Beispielbildern festgelegt, auf deren Basis das CNN seine internen Gewichte lernen kann. Während der online Prädiktionsphase, dient dieser dann automatisch durch das CNN geschätzte Wert für die Regelung bzw. Einstellung des oder der Betriebsparameter.

Vor dem Hintergrund der zur Verfügung stehenden Technik hat es sich für eine Vielzahl von Erntebedingungen im Rahmen von umfangreichen Versuchen als vorteilhaft erwiesen, einen insbesondere rechteckigen Eingangsdatensatz für das neuronale Netz mit Kantenlängen zwischen jeweils 100 und 400 Pixel, vorzugsweise zwischen 150 und 250 Pixeln, zu definieren. Diese Größe stellt bei den vorherrschenden Varianzen einen sehr guten Kompromiss zwischen benötigter Rechenleistung und -dauer dar, um die Einstellung der Betriebsparameter während eines laufenden Betriebes innerhalb von weniger als 30 Sekunden, vorzugsweise weniger als 3 Sekunden, nach einem aufgenommenen Bild umzusetzen.

Weiterhin ist bei Verwendung dieser Eingangsbildgröße ein Auffinden von hinreichend großen Bildbereichen, die weitestgehend ausschließlich von Boden bzw. Bodenaggregaten belegt sind, in einem ausreichend großen Anteil (ca. größer 75%) der Kamerabilder im Maschinenbetrieb möglich. Diese Bildgrößen sind auch in Relation zur Auflösung der verwendeten Bildsensorik, beispielsweise der Kamera, zu sehen, welche insbesondere innerhalb des Bereiches von 0,5 bis 10 Megapixeln, vorzugsweise innerhalb von 1,0 bis 1,5 Megapixeln liegt.

Vorzugsweise wertet die Auswertevorrichtung die Prüfdatensätze zumindest teilweise lokal auf der Maschine oder einem unmittelbar angebundenen Zugfahrzeug aus. Sofern insbesondere große Datenbanken vor dem Hintergrund einer Vielzahl von einstellbaren Parametern benötigt werden, kann die Auswertevorrichtung die Prüfdatensätze ebenfalls zumindest teilweise, vorzugsweise auch ganz auf einem drahtlos angebundenen Server auswerten, wobei hierbei allerdings auch ein entsprechend schnelle und stabile Datenverbindung für den laufenden Betrieb notwendig ist.

Auch Mischformen solcher Auswertungen sind denkbar, so dass ein Teil der für die Auswertung verwendeten Hardware auf der lokalen Maschine sowie ein weiterer Teil an einem entfernten Ort vorhanden sein kann.

Mittels etwaiger Umgebungssensoren, z.B. Bodensensoren, insbesondere mittels eines Feuchtesensors, kann bei einem weiteren Ausführungsbeispiel der Erfindung ergänzend die Feuchte der Bodenaggregate bestimmt und in der Auswertevorrichtung zusätzlich zur Einstellung des Betriebsparameters verwendet werden. Ein Feuchtesensor kann hierbei auf elektrischer oder optischer Basis arbeiten. Ein Sensor zur Erfassung der elektrischen Leitfähigkeit kann außerdem weitere Informationen zum Zustand des Bodens liefern, welche bei der Einstellung der Betriebsparameter der Siebstrecke genutzt werden können.

In einem weiteren Ausführungsbeispiel des erfindungsgemäßen Verfahren ist die Maschine mit einem Positionssensor, beispielsweise einem GNSS-Empfänger ausgestattet, und verfügt über Kartenmaterial der zu erntenden Flächen, welches entweder direkt auf der Maschine hinterlegt ist oder über einen entfernten Server mit Hilfe einer mobilen Netzwerkverbindung zur Verfügung gestellt wird. In diesem Fall kann die in dem Kartenmaterial hinterlegte lokale Bodenart in Kombination mit der Maschinenposition eine weitere Hilfsgröße für die Einstellung der Betriebsparameter der Siebstrecke sein.

Ebenfalls in einer Ausführung des Verfahrens kann die Maschine mit einem entfernten Server verbunden sein und über diesen zusätzlich Wetterdaten, d. h. Feuchte- und Temperaturinformationen, abrufen. Diese können zusätzlich in die Bestimmung der Betriebsparameter der Siebstrecke mit einfließen.

Vorzugsweise ist die Bestimmung des Betriebsparameters Teil eines Regelkreises der Maschine, bei dem insbesondere zusätzlich das Wetter, d.h. Feuchte und Temperaturen und/oder die Bodenart und/oder eine Rodestrategie als Eingangs- oder Referenzparameter verwendet werden. In einem solchen Regelkreis können weitere höherfrequent erfassbare, i.d.R. eindimensionale Eingangsgrößen, wie Füllstände der Förderelemente oder Auslastungswerte der Antriebselemente, wie Drücke, Drehmomente oder Stromaufnahmen, eingehen. Mittels solcher Eingangsgrößen können die Betriebsparameter der Maschine und insbesondere der Siebstrecke hochfrequent geregelt werden. Mit einem solchen Regelkreis können vorzugsweise zusätzlich die Rodetiefe und/oder die Fahrgeschwindigkeit geregelt werden.

Hierbei dienen die Referenzparameter, wie das Wetter, d.h. Feuchte und Temperaturen und/oder die Bodenart und/oder eine Rodestrategie und insbesondere das oder die erfindungsgemäß bestimmten Merkmale zur Beschreibung der Siebfähigkeit des Bodens im Sinne einer Kaskadenregelung zur Optimierung der Parameter des dann insbesondere kaskadiert aufgebauten Regelkreises und somit zum Ausgleich von Störgrößen, wie Schwankungen der Bodenart, welche basierend auf den Eingangsgrößen des höherfrequenten Regelkreises nicht erfassbar sind. Vorzugsweise liegt hierbei die Zykluszeit des höherfrequenten Regelkreises im Bereich von 1 bis 100 Millisekunden, während die Erfassung des oder der Siebfähigkeitsmerkmale aus dem Prüfdatensatz mit Zykluszeiten von 100 Millisekunden bis 30 Sekunden läuft.

Insbesondere sind sämtliche Eingangsparameter, die für eine Einstellung des Betriebsparameters relevant sein können, in einer entsprechenden Datenbasis, insbesondere in Form einer lokal oder extern vorgehaltenen Datenbank, miteinander verknüpft, wobei zusätzlich die Siebfähigkeitsmerkmale und Betriebsparameterwerte sowie insbesondere Umgebungsgrößen im empirischen bzw. gegebenenfalls auch analytischen Zusammenhang gebracht sein können. Die Einstellung des Betriebsparameters kann hierbei mittels der Datenbasis auch bei unterschiedlichsten Bedingungen erfolgen.

In einer Ausführung des erfindungsgemäßen Verfahrens ist die als EDV-Vorrichtung ausgeführte Auswertevorrichtung so konfiguriert, dass sie neben der Berechnung auch die Bilddaten und/oder sonstige Sensordaten und/oder Siebfähigkeitsmerkmale und/oder sonstige Berechnungszwischenergebnisse und/oder Betriebsparameter und/oder Umgebungsparameter insbesondere verknüpft mit Positionsinformationen der Maschine aufzeichnet. Diese Daten können sowohl lokal auf der in der Maschine mitgeführten Auswertevorrichtung gespeichert werden, wie auch über mobile Verbindungen an zentrale Server übermittelt werden. Diese Daten können der Darstellung des Absiebverhaltens auf dem bearbeiteten Feld in Kartenform dienen. Weiterhin können Sie, insbesondere wenn diese Daten durch eine Vielzahl von Maschinen aufgezeichnet werden und zentral zusammengeführt werden, der Verbesserung der algorithmischen Logik zur Erfassung der Siebfähigkeitsmerkmale wie auch etwaiger Regellogiken zur Ermittlung der Betriebsparameter dienen.

Die eingangs gestellte Aufgabe wird ebenfalls durch eine Maschine zum Ernten von Hackfrüchten und/oder zum Trennen von Hackfrüchten umfassend zumindest eine elektromagnetische, insbesondere optische, oder eine akustische Bilderfassungseinheit, ein relativ zu einem Maschinenrahmen der Maschine bewegbares und als Igel- oder Siebband ausgebildetes Transportelement und eine Auswertevorrichtung sowie Mittel zur Einstellung des oder eines weiteren Transportelements gelöst, wobei die Maschine geeignet ist, die Schritte des Verfahrens nach Anspruch 1 sowie die vor- oder nachfolgend noch beschriebenen weiteren erfindungsgemäßen Ausbildungen des Verfahrens auszuführen. Insbesondere handelt es sich bei dem Mittel zur Einstellung des Transportbandes um Mittel zur Einstellung eine Siebbandes wie vor- oder nachstehend beschrieben.

Die Aufgabe wird ebenfalls gelöst durch ein Computerprogrammprodukt, welches Befehle umfasst, die bewirken, dass die vor- oder nachbeschriebene erfindungsgemäße Maschine zum Ernten von Hackfrüchten und/oder zum Trennen von Hackfrüchten die vor- oder nachbeschriebenen Verfahrensschritte ausführt.

Weitere Vorteile oder Einzelheiten der Erfindung sind der nachfolgenden Figurenbeschreibung zu entnehmen. Schematisch dargestellt zeigt:

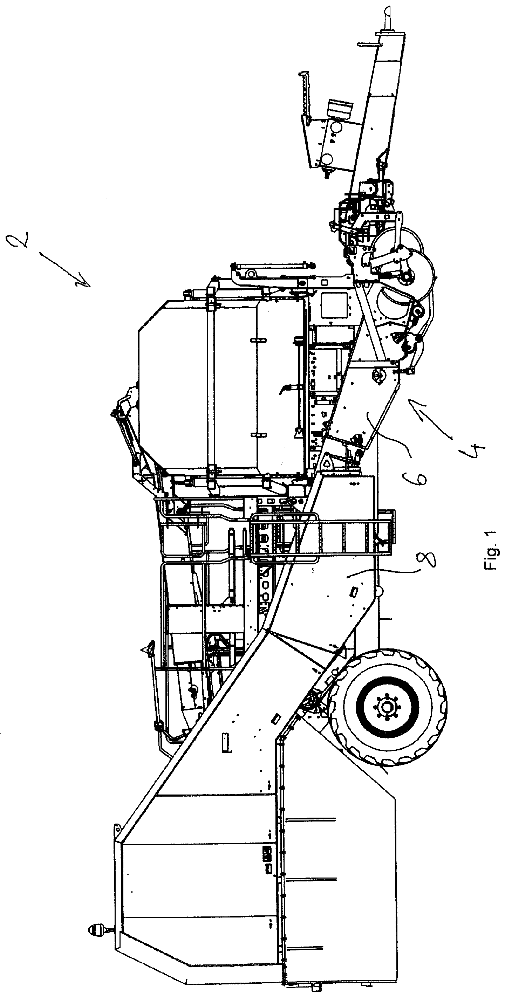

- Fig. 1: eine erfindungsgemäße Maschine in einer Seitenansicht,
- Fig. 2: einen Teil des Gegenstands nach Fig. 1 in einer perspektivischen Darstellung,
- Fig. 3: den von einer optischen Bilderfassungseinheit erfassten Teil des Gegenstands nach Fig. 1,
- Fig. 4: die Auswahl eines Bereiches eines Prüfbildes,
- Fig. 5: die Klassifizierungsmöglichkeiten des Bereiches nach Fig. 4,
- Fig. 6: ein Mittel zur Beeinflussung des Siebbandes,
- Fig. 7: ein weiteres Mittel zur Beeinflussung des Siebbandes,
- Fig. 8: ein weiteres Mittel zur Beeinflussung des Siebbandes,
- Fig. 9: eine weiteres Mittel zur Beeinflussung des Siebbandes,
- Fig. 10: ein Ablaufdiagramm eines erfindungsgemäßen Verfahrens,
- Fig. 11: ein weiteres Diagramm für einen weiteren erfindungsgemäßen Verfahrensablaufs.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen führen. Sofern sinnvoll, werden funktional gleichwirkende Elemente mit identischen Bezugsziffern versehen.

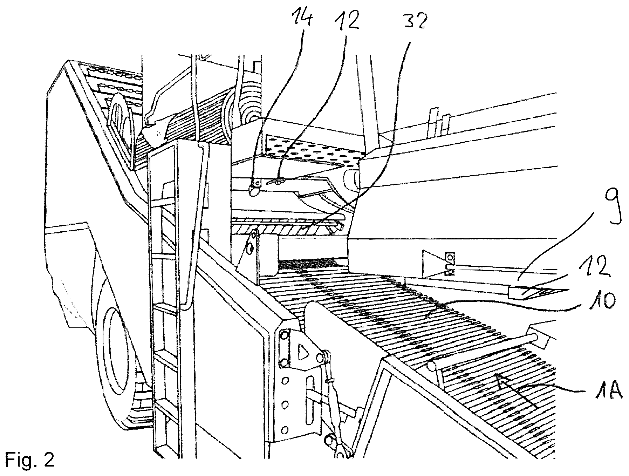

Eine Maschine 2 ist vorliegend zum Ernten von Hackfrüchten in Form von Kartoffeln und mithin als Kartoffelroder ausgebildet. Das im Bereich einer Aufnahme 4 aufgenommene Material in Form von Boden bzw. Bodenaggregaten, Hackfrüchten, Kraut und/oder Steinen wird über hinter einem Maschinenrahmen 6 sowie weiteren Rahmenteilen 8 gelagerten Transportelementen in Form von Siebbändern 10 in eine Förderrichtung 1A transportiert. Ein Siebband 10 schließt sich unmittelbar an die Aufnahme 4 an (Fig. 2). Das mittels des Siebbandes 10 in Richtung 1A transportierte Gut wird von einer ersten optischen Bilderfassungseinheit 12 in Form einer RGB-Kamera erfasst, die befestigt an einem Maschinenrahmenteil 9 schräg auf das Siebband 10 in Richtung der Aufnahme 4 gerichtet ist. Ein Beleuchtungsmittel 14 beleuchtet das Siebband im Bereich einer zweiten Bilderfassungseinheit 12, die in Förderrichtung 1A hinter der ersten Bilderfassungseinheit 12 angeordnet ist.

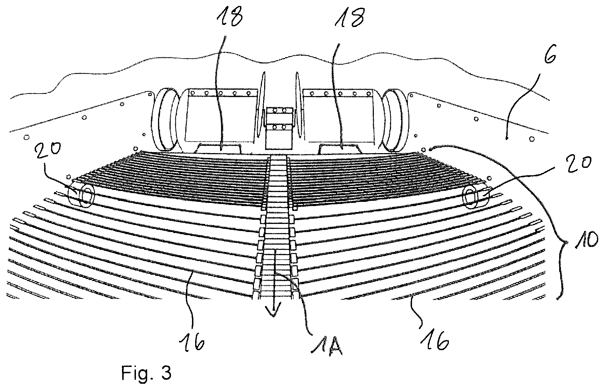

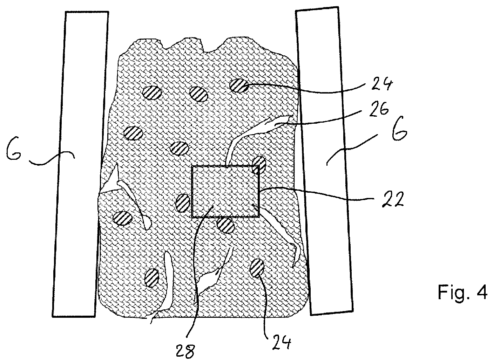

Der von der ersten, in Fig. 2 rechts angeordneten Bilderfassungseinheit 12 erfasste Bereich der Maschine 2 ist in Fig. 3 dargestellt, hier ohne den Besatz von Erde. Erkennbar sind insbesondere die einzelnen Siebstäbe 16 des den waagerechten Rodescharen 18 der Aufnahme 4 direkt nachgelagerten Siebbandes 10. Unterhalb des Siebbandes 10 finden sich am Maschinenrahmen 6 Einstellmittel zum Einstellen von Betriebsparametern für den Betrieb des Siebbandes 10. Hierbei kann es sich um die in der Fig. 3 dargestellten Rollen 20 handeln, die je nach Ausbildung der erfindungsgemäßen Maschine 2 Teil weiterer Einstellmittel sein können. Mittels einer Auswertevorrichtung wird automatisiert ein Bildausschnitt 22 ausgewählt (Fig. 4, in dem möglichst wenig Hackfrüchte 24 sowie Beimengungen 26 (hier: Kraut) enthalten sind. Der Bildausschnitt 22 weist vorliegend zumindest 90% Bodenaggregate 28 auf und ist bereits rechtwinklig ausgerichtet, während der Rest der Abbildung noch leicht perspektivisch verzerrt dargestellt ist.

Die Erkennung des Krauts und der Bodenaggregate erfolgt mittels einer pixelweisen Klassifizierung, beispielsweise anhand der von der optischen Bilderfassungseinheit 12 aufgenommenen Farbwerte umfassend Grau- und/oder tatsächliche Farben repräsentierende Werte. Diese werden mit Referenzwerten bzw. Referenzwertbereichen verglichen werden. Durch diese Form der Unterscheidung wird eine qualitative Identifizierung des Bestandteils auf dem Prüfbild ermöglicht und ein Pixel insbesondere innerhalb vorgebbarer oder vorgegebener Schwellwerte einer Klasse von (Ernte-)Material (Erde/Bodenaggregate, Kraut, Hackfrucht, Stein) zugeordnet.

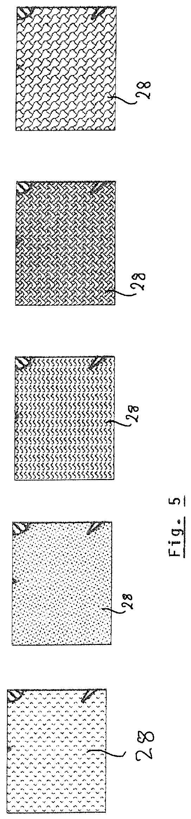

Sofern ein Bereich 22 identifiziert worden ist, wird der diesen Bereich darstellende Prüfdatensatz oder Prüfdatensatzteil in einer gegebenenfalls an die Eingabeerfordernisse des neuronalen Netzes angepassten Fassung diesem zugeführt. Das neuronale Netz, insbesondere ein CNN, ordnet dem Bildbereich zumindest eine Bodenaggregatgröße zu, in einer weiteren Ausführungsform der Erfindung auch Anteile verschiedener Siebbandabschnittgrößenverteilungen im Bild. Im Ausschnitt der Fig. 4 ist eine Klutengröße mit besonders großen Kluten gezeigt, wie diese der Fig. 5 im rechten Abbildungsteil zu entnehmen sind. Von diesem rechten Abbildungsteil nach links wandernd sind weitere Größenklassen von Bodenaggregaten gezeigt, die durch das neuronale Netz erkannt werden und mit denen das Neuronale Netz vorab trainiert wurde.

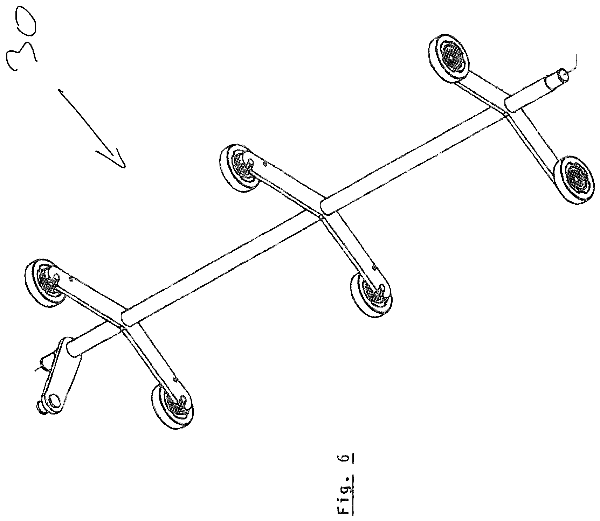

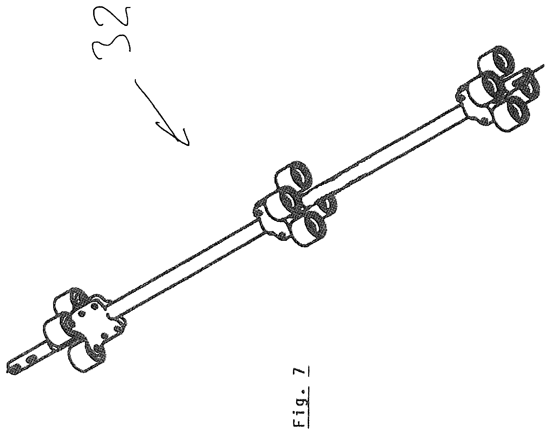

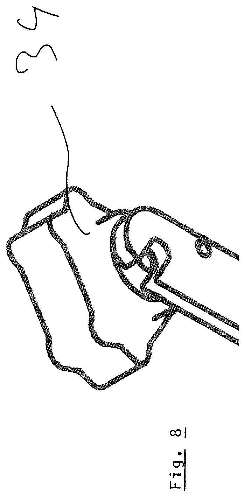

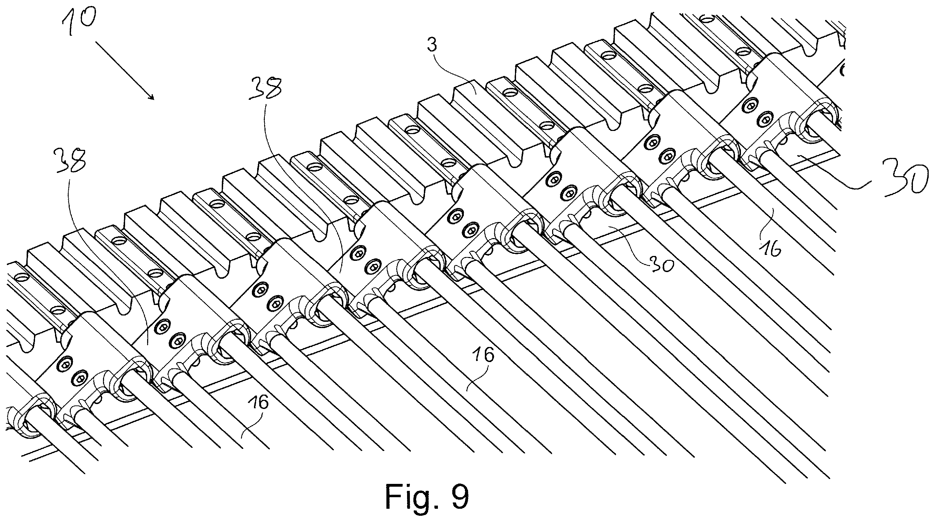

In Abhängigkeit der so definierten Aggregatgröße kann beispielsweise ein Betriebsparameter, z.B. eine Amplitude eines Ausschlags oder eine Frequenz der Bewegung des in der Fig. 6 gezeigten Schwingklopfers 30 variiert werden. Durch dessen Schwingbewegung werden Impulse auf das Siebband 10 übertragen, was zur Zerkleinerung von Bodenaggregaten, insbesondere von Kluten führt. Alternativ oder ergänzend wird eine Frequenz des in Fig. 7 gezeigten Rotorklopfers 32 oder eine Position des in Fig. 8 gezeigten Dreieckrades 34 in Relation zum das Siebband tragenden Maschinenrahmen 6 variiert. Ebenfalls kann eine Einstellschiene 30 (Fig. 9) in ihrem Abstand zum Riemen 3 des Siebbandes 10 geändert werden, so dass die aus jeweils zwei über Verbinder 38 verbundenen Siebstäbe 16 gebildeten Siebstabeinheiten bewegt werden und dadurch die lichte Weite der Öffnung zwischen einander nachfolgenden Stäben einander nachfolgender Siebstabeinheiten variiert werden.

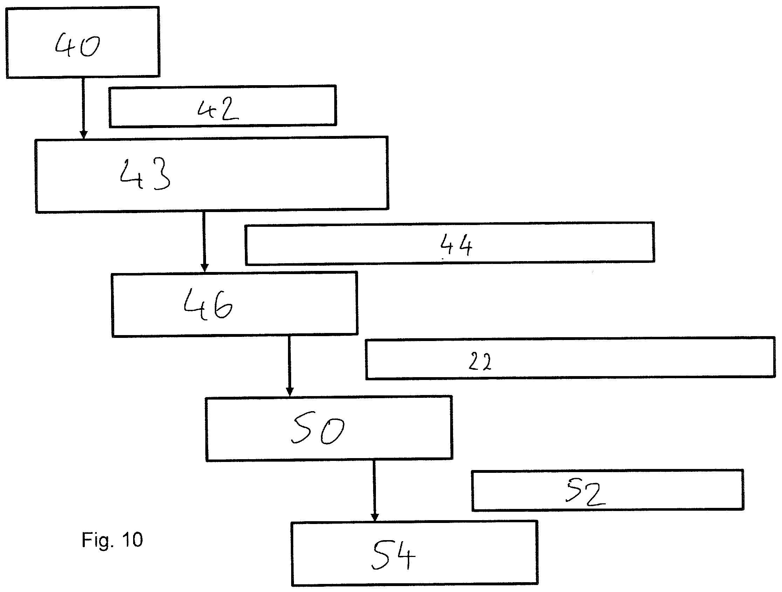

Ein Ablauf eines erfindungsgemäßen Verfahrens nach Fig. 10 beginnt mit einem ersten Verfahrensschritt 40, in dem mittels einer Bilderfassungseinheit 12 ein Prüfdatensatz 42 erzeugt wird, der anschließend mittels pixelbasierter Klassifizierung im Schritt 43 qualitativ aufgeteilt wird, so dass eine Zuordnung 44 einzelner Bildbereiche bzw. Pixel des Prüfdatensatzes zu Kartoffeln, Kraut, Erde oder Boden usw. vorgenommen werden kann. Anschließend wird im Schritt 46 ein Bereich bzw. Bildausschnitt22, der nur Erde und entsprechend Bodenaggregate aufweist, ausgewählt. Dieser Bereich 22 wird im Schritt 50 mit einem CNN analysiert, über das dem Bildausschnitt im Ergebnis 52 eine Größenklasse gemäß Fig. 5 zugeordnet wird. Anschließend werden im Schritt 54 gegebenenfalls die Betriebsparameter geändert, in dem Einstellsignale ausgegeben oder initiiert werden, woraufhin sich die Siebleistung des Siebbandes 10 anpasst.

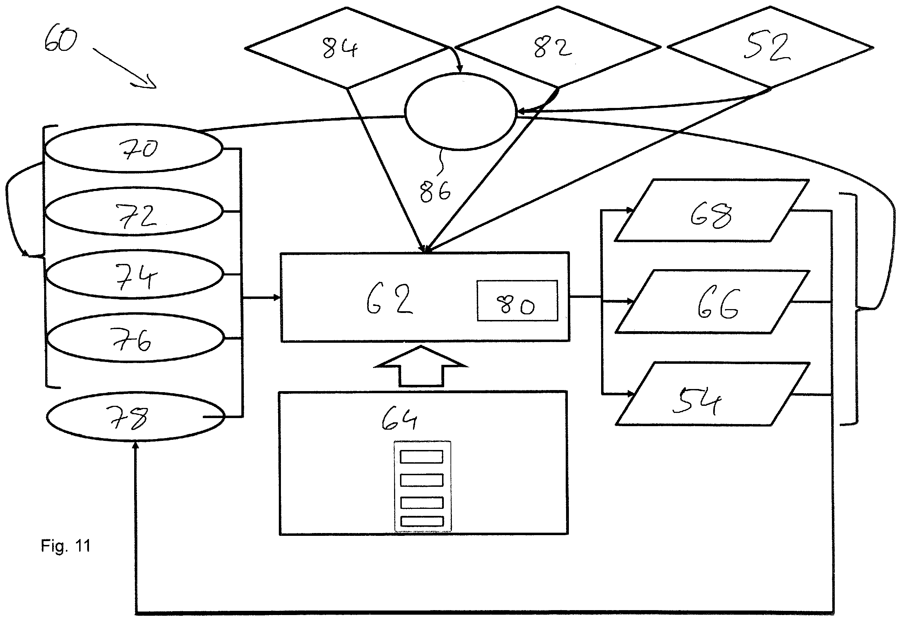

Die Einstellung der Siebleistung des Siebbandes 10 und damit auch der Siebstrecke gemäß Schritt 54 ist vorzugsweise Teil eines Regelkreises 60 (Fig. 11), in dem eine die Auswertevorrichtung umfassende Maschinensteuerung 62 auf eine lokal oder extern vorhandene Datenbank 64 zugreift und von dieser Zuordnungsvorschriften für einerseits Einstellungen der Betriebsparameter des Siebbandes gemäß Schritt 54, Rodetiefeneinstellungen 66 und/oder Fahrgeschwindigkeiten 68 erhält In der Maschinensteuerung 62 können darüber hinaus eine Vielzahl weiterer Informationen verarbeitet werden. Hierzu zählen Informationen einer Füllstandserkennung 70 am Siebanfang und/oder einer Füllstandserkennung 72 am Siebbandende und/oder Druckinformationen 74 etwaiger Trenngeräte und/oder Informationen einer Verstopfungserkennung 76 etwaiger Trenngeräte. Schließlich können die Ist-Werte der einzelnen Betriebsparameter der einzelnen funktionellen Aggregate im Schritt 78 erfasst und als Eingangsinformationen für die Maschinensteuerung 62 verarbeitet werden.

Typischerweise ist eine Auswertevorrichtung 80 Teil der Maschinensteuerung 62. Zusätzliche Eingangsinformationen für die Maschinensteuerung 62 sind neben der Abschätzung 52 der Bodenaggregatgröße vom Bedienpersonal vorgebbare Rodestrategien 82 und/oder Umgebungsinformationen über Wetter und Bodenart, die aus einer Erfassung 84 kommen. Ein Kreis 86 symbolisiert den Einfluss der durch die Auswertevorrichtung durchgeführten Größenklassenerkennung 52, der Rodestrategieerfassung 82 und der Umgebungsvariablenerfassung 84 auf die durch die Schritte 70 bis 78 abgebildete Rodeleistung der Maschine 2. Zum Beispiel kann bei einer Rodestrategie, die auf maximalen Ertrag abstellt, bei Erkennung einer maximalen Aggregatgrößenklasse die Amplitude des Schwingklopfers, der Siebstababstand und die Bandgeschwindigkeit maximiert werden, während bei einer schonenderen Strategie die Amplitude weniger stark hochgefahren und gleichzeitig die Bandgeschwindigkeit reduziert wird.

## Patentansprüche

1. Verfahren zum Betrieb einer Maschine (2) zum Ernten von Hackfrüchten und/oder zum Trennen von Hackfrüchten (24) von weiterem, mitgefördertem Material umfassend zumindest Boden in Form von loser Erde und/oder Bodenaggregaten (28) sowie gegebenenfalls Kraut und/oder Steinen,
wobei durch mindestens eine elektromagnetische, insbesondere optische, oder eine akustische Bilderfassungseinheit (12) zumindest ein Prüfbild von zumindest einem mittels zumindest eines Transportelements in Form eines Igel- oder Siebbandes (10) relativ zu einem Maschinenrahmen (6) der Maschine (2) fortbewegten Teil des Materials aufgenommen wird und eine Auswertevorrichtung auf Basis zumindest eines anhand des Prüfbildes erzeugten und/oder durch dieses ausgebildeten Prüfdatensatzes ein Einstellsignal zur Einstellung zumindest eines Betriebsparameters des Transportelements und/oder eines weiteren Transportelements der Maschine (2) erzeugt, wobei sich durch das Einstellsignal die Einwirkung eines oder mehrerer Stell- oder Antriebsmittel des Transportelements ändert, um die Absiebung des Bodens zu variieren, wobei zumindest ein Merkmal zur Beschreibung der Siebfähigkeit des mitgeförderten Bodens durch die Auswertevorrichtung bestimmt und zur Einstellung des Betriebsparameters verwendet wird, wobei nach einer qualitativen Bestimmung der im Prüfbild und im Erntegut vorhandenen Bestandteile mittels eines Klassifizierungsverfahrens eine quantitative Bestimmung des zumindest einen Siebfähigkeitsmerkmals vorgenommen wird, wobei das Merkmal einen oder mehrere Werte umfasst, der oder die die Größe eines oder mehrerer Bodenaggregate (28) beschreiben.

2. Verfahren nach Anspruch 1, **dadurch gekennzeichnet, dass** das Merkmal einen oder mehrere Werte umfasst, der oder die die Form, Festigkeit oder Farbe eines oder mehrerer Bodenaggregate (28) und/oder eine oder mehrere insbesondere statistische Verteilungen der Größe, Form, Festigkeit oder Farbe einer Vielzahl von Bodenaggregaten (28) beschreiben.

3. Verfahren nach Anspruch 1 oder 2, **dadurch gekennzeichnet, dass** das Merkmal durch die Auswertevorrichtung auf Basis eines durch den Prüfdatensatz erzeugten oder durch diesen ausgebildeten Eingangsdatensatzes mittels einer Neuronalen-Netz-, Histogramm- und/oder Structure-from-Motion-Analyse bestimmt wird.

4. Verfahren nach den Ansprüchen 2 und 3, **dadurch gekennzeichnet, dass** das Neuronale Netz als Convolutional Neural Network ausgeführt ist, welches jeden Eingangsdatensatz in eine von mehreren Klassen einordnet, die die Werte unterschiedlicher Siebfähigkeitsmerkmale darstellen.

5. Verfahren nach einem der vorherigen Ansprüche, **dadurch gekennzeichnet, dass** für die Bestimmung des Merkmals durch die Auswertevorrichtung ein zumindest zu 75%, vorzugsweise zu 90%, weiter vorzugsweise zu 95% und noch weiter vorzugsweise ausschließlich Bodenaggregate (28) aufweisender und insbesondere zusammenhängender sowie vorzugsweise rechteckiger Bereich (22) des Prüfbildes oder des Prüfdatensatzes ausgewählt wird.

6. Verfahren nach Anspruch 5 und unter Einschluss von Anspruch 3, **dadurch gekennzeichnet, dass** der diesen Bereich (22) darstellende Teil des Prüfdatensatzes direkt oder bearbeitet als Eingangsdatensatz in die Neuronales-Netz-, Histogramm- und/oder Structure-from-Motion-Analyse gegeben wird, in welcher dem Bereich (22) das Merkmal zuordnet wird, welches zur Einstellung des Betriebsparameters verwendet wird.

7. Verfahren nach einem der vorherigen Ansprüche, **dadurch gekennzeichnet, dass** die Auswertevorrichtung die Prüfdatensätze zumindest teilweise lokal auf der Maschine (2) oder einem unmittelbar angebundenen Zugfahrzeug auswertet.

8. Verfahren nach einem der vorherigen Ansprüche, **dadurch gekennzeichnet, dass** die Auswertevorrichtung die Prüfdatensätze auf einem drahtlos angebundenen Server auswertet.

9. Verfahren nach einem der vorherigen Ansprüche, **dadurch gekennzeichnet, dass** der Betriebsparameter des als Siebband (10) ausgebildete Transportelements eine Siebbandgeschwindigkeit, eine Aufnahmesiebbandgeschwindigkeit, eine Einstellhöhe zumindest einer Dreiecksrolle, eine Einstellhöhe einer Fallstufe, eine Frequenz eines Klopfers, eine Amplitude eines Klopfers, die Position eines Klopfers und/oder die lichte Weite des Siebbandes ist.

10. Verfahren nach einem der vorherigen Ansprüche, **dadurch gekennzeichnet, dass** mittels eines Feuchtesensors die Feuchte der Bodenaggregate (28) bestimmt und in der Auswertevorrichtung zur Einstellung des Betriebsparameters verwendet wird.

11. Verfahren nach einem der vorherigen Ansprüche, **dadurch gekennzeichnet, dass** die Bestimmung des Betriebsparameters Teil eines Regelkreises der Maschine (2) ist, insbesondere bei dem zusätzlich das Wetter und/oder die Bodenart und/oder eine Rodestrategie als Eingangsparameter verwendet werden.

12. Verfahren nach Anspruch 11, **dadurch gekennzeichnet, dass** mit dem Regelkreis zusätzlich die Rodetiefe und/oder die Fahrgeschwindigkeit geregelt werden.

13. Verfahren nach einem der vorhergehenden Ansprüche, **dadurch gekennzeichnet, dass** die Einstellung des Betriebsparameters mittels einer Datenbasis, insbesondere in Form einer Datenbank, erfolgt, in der Merkmale und Betriebsparameterwerte sowie insbesondere Umgebungsgrößen miteinander verknüpft niedergelegt sind.

14. Maschine (2) zum Ernten von Hackfrüchten (4) und/oder zum Trennen von Hackfrüchten (4) umfassend zumindest eine elektromagnetische, insbesondere optische, oder eine akustische Bilderfassungseinheit (12), ein relativ zu einem Maschinenrahmen der Maschine (2) bewegbares Transportelement in Form eines Igel- oder Siebbands (10) und eine Auswertevorrichtung sowie Mittel zur Einstellung des oder eines weiteren Transportelements, wobei die Maschine geeignet ist, die Schritte des Verfahrens nach einem der vorherigen Ansprüche auszuführen.

15. Computerprogrammprodukt, umfassend Befehle, die bewirken, dass die Maschine nach Anspruch 15 die Verfahrensschritte nach einem der Ansprüche 1 bis 14 ausführt.

## Claims

1. A method for operating a machine (2) for harvesting root crops and/or for separating root crops (24) from further additionally conveyed material that includes at least soil in the form of loose earth and/or soil aggregates (28), and also, if applicable, leaves and/or stones,
wherein, by means of at least one electromagnetic, in particular optical, or acoustic image acquisition unit (12), at least one inspection image is captured of at least one portion of the material moved relative to a machine frame (6) of the machine (2) by at least one transport element, in particular a hedgehog band or screening band (10), and, on the basis of at least one inspection data set generated using the inspection image and/or formed by this image, an evaluation device generates an adjustment signal for ad-justing at least one operating parameter of the transport element and/or a further transport element of the machine (2), wherein the adjustment signal changes the action of one or more actuating or drive devices of the transport element in order to vary the screening of the soil, wherein at least one feature for describing the capability of the additionally conveyed soil to be screened is determined by the evaluation device and is used for adjusting the operating parameter, wherein, after a qualitative determination of the components present in the inspection image and in the crop via a classification method, a quantitative determination of the at least one screening capability feature is performed, wherein the feature comprises one or more values describing the size of one or more soil aggregates (28).

2. The method as claimed in claim 1, **characterized in that** the feature comprises one or more values which describe the shape, strength, or color of one or more soil aggregates (28) and/or one or more in particular statistical distributions of the size, shape, strength or color of a plurality of soil aggregates (28).

3. The method as claimed in claim 1 or 2, **characterized in that** the feature is determined by the evaluation device on the basis of an input data set, generated by or formed by the inspection data set, by means of a neural-network-based, histogram-based and/or structure-from-motion analysis.

4. The method as claimed in claims 2 and 3, **characterized in that** the neural network is designed as a convolutional neural network, which classifies each input data set into one of a number of classes which represent the values of different screening capability features.

5. The method as claimed in any one of the previous claims, **characterized in that** for the determination of the feature by the evaluation device, an in particular contiguous and preferably rectangular region (22) of the inspection image or of the inspection data set is selected that contains at least 75%, preferably 90%, more preferably 95% and even more preferably exclusively, soil aggregates (28).

6. The method as claimed in claim 5 and incorporating claim 3, **characterized in that** the part of the inspection data set representing this region (22) is provided directly or in processed form as an input data set into the neural-network-based, histogram-based and/or structure-from-motion analysis, in which the region (22) is assigned the feature which is used for adjusting the operating parameter.

7. The method as claimed in any one of the previous claims, **characterized in that** the evaluation device at least partly evaluates the inspection data sets locally on the machine (2) or on a directly connected towing vehicle.

8. The method as claimed in any one of the previous claims, **characterized in that** the evaluation device evaluates the inspection data records on a wirelessly connected server.

9. The method as claimed in any one of the previous claims, **characterized in that** the operating parameter of the transport element formed as a screening band (10) is a screening band speed, a collection screening band speed, an adjustable height of at least one triangular roller, an adjustable height of a drop stage, a frequency of a knocker, an amplitude of a knocker, the position of a knocker, and/or the inner width of the screening band.

10. The method as claimed in any one of the previous claims, **characterized in that** the moisture content of the soil aggregates (28) is determined by means of a moisture sensor and used in the evaluation device for adjusting the operating parameter.

11. The method as claimed in any one of the previous claims, **characterized in that** the determination of the operating parameter is part of a control loop of the machine (2), in particular in which the weather and/or the soil type and/or a land clearing strategy are additionally used as input parameters.

12. The method as claimed in claim 12, **characterized in that** the rooting depth and/or the driving speed are additionally controlled with the control loop.

13. The method as claimed in any one of the previous claims, **characterized in that** the operating parameter is adjusted by means of a database, in particular in the form of a data bank, in which features and operating parameter values as well as in particular environmental variables are stored such that they are linked to each other.

14. A machine (2) for harvesting root crops (4) and/or for separating root crops (4), comprising at least one electromagnetic, in particular optical, or acoustic image acquisition unit (12), a transport element, in particular in the form of a screening band (10), which can be moved relative to a machine frame of the machine (2), and an evaluation device as well as means for adjusting the or an additional transport element, wherein the machine is suitable for carrying out the steps of the method as claimed in any one of the previous claims.

15. A computer program product comprising commands which cause the machine according to claim 15 to execute the method steps as claimed in any one of claims 1 to 14.

## Revendications

1. Procédé pour faire fonctionner une machine (2) pour récolter des plantes sarclées et/ou pour séparer des plantes sarclées (24) d'une substance entraînée avec celles-ci, comprenant au moins du sol sous la forme de terre meuble et/ou d'agrégats de sol (28) et éventuellement de l'herbe et/ou des cailloux,
au moins une image d'essai d'au moins une partie de la substance déplacée à l'aide d'au moins un élément de transport sous forme d'une bande à picots ou d'une bande-tamis (10) par rapport à un bâti de machine (6) de la machine (2) étant acquise par au moins une unité de détection d'image (12) électromagnétique, en particulier optique, ou acoustique, et un dispositif d'évaluation générant un signal d'ajustement pour ajuster au moins un paramètre de fonctionnement de l'élément de transport et/ou d'un autre élément de transport de la machine (2) sur la base d'au moins un ensemble de données d'essai généré au moyen de l'image d'essai et/ou formé par cette image d'essai, le signal d'ajustement modifiant l'action d'un ou de plusieurs organes de réglage ou d'entraînement de l'élément de transport afin de faire varier le tamisage du sol, au moins une caractéristique destinée à décrire l'aptitude au tamisage du sol entraîné étant déterminée par le dispositif d'évaluation et utilisée pour ajuster le paramètre de fonctionnement, une détermination quantitative de l'au moins une caractéristique d'aptitude au tamisage étant effectuée après une détermination qualitative des composants présents dans l'image d'essai et dans le produit récolté au moyen d'un procédé de classification, la caractéristique comprenant une ou plusieurs valeurs qui décrivent la taille d'un ou de plusieurs agrégats de sol (28).

2. Procédé selon la revendication 1, **caractérisé en ce que** la caractéristique comprend une ou plusieurs valeurs qui décrivent la forme, la résistance ou la couleur d'un ou de plusieurs agrégats de sol (28) et/ou une ou plusieurs distributions, en particulier statistiques, de la taille, de la forme, de la résistance ou de la couleur d'une pluralité d'agrégats de sol (28).

3. Procédé selon la revendication 1 ou 2, **caractérisé en ce que** la caractéristique est déterminée par le dispositif d'évaluation sur la base d'un ensemble de données d'entrée généré par le biais de l'ensemble de données d'essai ou formé par celui-ci au moyen d'une analyse par réseau neuronal, par histogramme et/ou de structure à partir du mouvement.

4. Procédé selon les revendications 2 et 3, **caractérisé en ce que** le réseau neuronal est réalisé sous forme de réseau neuronal convolutionnel, lequel classe chaque ensemble de données d'entrée dans l'une de plusieurs classes qui représentent les valeurs de différentes caractéristiques d'aptitude au tamisage.

5. Procédé selon l'une des revendications précédentes, **caractérisé en ce que**, pour la détermination de la caractéristique par le dispositif d'évaluation, une zone (22) de l'image d'essai ou de l'ensemble de données d'essai comportant au moins 75 %, de préférence 90 %, plus préférablement 95 % et encore plus préférablement exclusivement des agrégats de sol (28) et étant en particulier contiguë ainsi que de préférence rectangulaire, est sélectionnée.

6. Procédé selon la revendication 5 et en intégrant la revendication 3, **caractérisé en ce que** la partie de l'ensemble de données d'essai représentant cette zone (22) est introduite directement ou après traitement en tant qu'ensemble de données d'entrée dans l'analyse par réseau neuronal, par histogramme et/ou de structure à partir du mouvement, dans laquelle la caractéristique est associée à la zone (22) et est utilisée pour ajuster le paramètre de fonctionnement.

7. Procédé selon l'une des revendications précédentes, **caractérisé en ce que** le dispositif d'évaluation évalue les ensembles de données d'essai au moins en partie localement sur la machine (2) ou sur un véhicule tracteur directement relié.

8. Procédé selon l'une des revendications précédentes, **caractérisé en ce que** le dispositif d'évaluation évalue les ensembles de données d'essai sur un serveur relié sans fil.

9. Procédé selon l'une des revendications précédentes, **caractérisé en ce que** le paramètre de fonctionnement de l'élément de transport réalisé sous forme de bande-tamis (10) est une vitesse de la bande-tamis, une vitesse d'admission de la bande-tamis, une hauteur de réglage d'au moins un rouleau triangulaire, une hauteur de réglage d'un étage de chute, une fréquence d'un dispositif de percussion, une amplitude d'un dispositif de percussion, la position d'un dispositif de percussion et/ou la largeur interne de la bande-tamis.

10. Procédé selon l'une des revendications précédentes, **caractérisé en ce que** l'humidité des agrégats de sol (28) est déterminée au moyen d'un capteur d'humidité et est utilisée dans le dispositif d'évaluation pour ajuster le paramètre de fonctionnement.

11. Procédé selon l'une des revendications précédentes, **caractérisé en ce que** la détermination du paramètre de fonctionnement fait partie d'une boucle de régulation de la machine (2), en particulier lorsque les conditions météorologiques et/ou le type de sol et/ou une stratégie d'arrachage sont utilisés en plus en tant que paramètres d'entrée.

12. Procédé selon la revendication 11, **caractérisé en ce que** la profondeur d'arrachage et/ou la vitesse de déplacement sont également régulées au moyen de la boucle de régulation.

13. Procédé selon l'une des revendications précédentes, **caractérisé en ce que** l'ajustement du paramètre de fonctionnement s'effectue au moyen d'une base de données, en particulier sous forme d'une banque de données, dans laquelle des caractéristiques et des valeurs de paramètres de fonctionnement et en particulier des grandeurs environnementales sont enregistrées de manière combinée les unes aux autres.

14. Machine (2) pour récolter des plantes sarclées (4) et/ou pour séparer des plantes sarclées (4) comprenant au moins une unité de détection d'image (12) électromagnétique, en particulier optique, ou acoustique, un élément de transport mobile par rapport à un bâti de machine de la machine (2) sous forme d'une bande à picots ou d'une bande-tamis (10) et un dispositif d'évaluation ainsi que des moyens pour ajuster l'élément de transport ou un autre élément de transport, la machine étant apte à exécuter les étapes du procédé selon l'une quelconque des revendications précédentes.

15. Produit-programme informatique, comprenant des instructions qui amènent la machine selon la revendication 15 à exécuter les étapes du procédé selon l'une quelconque des revendications 1 à 14.
